# EUROPÄISCHE PATENTSCHRIFT

(11) **EP 2 181 901 B1**
(45) Veröffentlichungstag und Bekanntmachung des Hinweises auf die Patenterteilung: **26.12.2012**
(21) Anmeldenummer: 09169051.1
(22) Anmeldetag: 31.08.2009
(51) Int. Cl.: B60S 1/38, B60S 1/52

(54) **Wischerblatt zum Reinigen einer Fahrzeugscheibe**
Wiper blade for cleaning a vehicle screen
Balais d'essuie-glace pour le nettoyage d'une vitre de véhicule

(30) Priorität: 29.10.2008 DE 102008043283
(43) Veröffentlichungstag der Anmeldung: 05.05.2010
(73) Patentinhaber: Robert Bosch GmbH, 70442 Stuttgart (DE)
(72) Erfinder: Wynen, Paul, 3910, Neerpelt (BE); Buseyne, Wim, 3500, Hasselt (BE)

(56) Entgegenhaltungen:
- EP-A1- 0 889 814
- WO-A1-98/54036
- WO-A1-2006/106249
- DE-A1- 10 025 630
- DE-A1-102006 057 231
- JP-A- 7 215 174
- US-A- 4 524 481
- US-A- 6 119 300

## Beschreibung

### Stand der Technik

Die Erfindung betrifft ein Wischerblatt zum Reinigen von Scheiben eines Fahrzeugs, beispielsweise eines Kraftfahrzeugs. Ein solches Wischerblatt wird an einer Wischereinrichtung eines Fahrzeugs befestigt bzw. an dessen Wischerarm.

Aus dem Stand der Technik, wie er in der EP 0 889 814 offenbart ist, ist ein Wischerblatt bekannt, das eine Wischerleiste aus einem verformbaren Material aufweist. Die Wischerleiste weist dabei zwei zueinander parallele Wischerlippen auf und ein zwischen den Wischerlippen angeordnetes Intensivreinigungselement. Das Intensivreinigungselement ist dabei an einer Wandung eines längs in der Wischerleiste verlaufenden Waschflüssigkeitskanals angebracht. Die Wischerleiste weist zur Verbindung mit einem Wischerblattgestell eine Rückenleiste auf. Die Rückenleiste weist dabei den Waschflüssigkeitskanal auf und ist über elastische Kippstege mit den beiden Wischlippen verbunden.

Aus der US 6 119 300 ist des Weiteren ein Wischerblatt für Fahrzeuge bekannt. Das Wischerblatt weist dabei ein Rückenteil auf, an welchem zwei parallel zueinander angeordnete Wischerlippen befestigt sind. An der Längsseite der jeweiligen Wischerlippe ist ein Intensivreinigungselement befestigt. Des Weiteren weist das Rückenteil einen Waschflüssigkeitskanal auf, wobei Wachflüssigkeit aus dem Kanal über Öffnungen auf beiden Längsseiten des Wischerblatts und zwischen den Wischerlippen austreten kann.

Weiter ist in der SE 9504293 ein Wischerblatt offenbart, mit zwei Wischerlippen. Die beiden Wischerlippen bilden dabei jeweils zwei separate Teile, die in entsprechenden Aufnahmen an dem Wischerblatt befestigbar sind. Des Weiteren ist ein Schabelement und ein Blasebalg zwischen den Wischerlippen vorgesehen. Der Blasebalg kann dabei mittels Luft oder Flüssigkeit auseinander gefaltet werden und wirkt mit dem Schabelement zusammen.

Aus der JP 7215174 ist außerdem eine Wischerblatt bekannt, bei welchem eine Wischerlippe über einen Verbindungssteg mit einem Rückenteil verbunden ist. Am vorderen Ende der Wischerlippe ist des Weiteren eine Nut vorgesehen.

Weiter ist in der US 4 524 481 ein Wischerblatt offenbart, wobei das Wischerblatt beispielsweise einen U-förmigen Abschnitt aufweist, der einen U-förmigen Hohlraum bildet. Der U-förmige Hohlraum bildet dabei eine abgerundete Rippe im Inneren. Auf der Außenseite des U-förmigen Abschnitts sind drei Rippen vorgesehen. Im Betrieb drückt nun die Rippe im Inneren des Hohlraums den Abschnitt mit seiner mittleren Rippe gegen die zu wischende Scheibe. Des Weiteren bewirkt eine Wischerbewegung, dass die Rippe im Inneren des Hohlraums die beiden anderen Rippen rechts und links von der mittleren Rippe abwechselnd mit der Scheibe zusätzlich in Kontakt bringt, um diese zu wischen.

Aus DE 10 2006 057 231 A1 ist ein Wischerblatt mit einem Hohlraum und einer Wischlippe bekannt, wobei die Wischlippe über einen Steg mit dem Hohlraum verbunden ist.

Aus DE 100 25 630 A1 ist ein Wischerblatt für eine Wischeinrichtung eines Kraftfahrzeuges zum Wischen von Fahrzeugscheiben bekannt, wobei das Wischerblatt einen Wischerabschnitt mit einem Hohlraum aufweist, wobei die Wände des Wischabschnittes über eine Gelenkeinrichtung miteinander verbunden sind.

Gemäß der Erfindung wird nun ein Wischerblatt für eine Wischereinrichtung eines Fahrzeugs vorgesehen zum Wischen von Fahrzeugscheiben. Das Wischerblatt für eine Wischereinrichtung eines Fahrzeugs, weist hierbei einen Wischerabschnitt mit einem Hohlraum auf, wobei die Wände des Wischerabschnitts über eine Gelenkeinrichtung jeweils miteinander verbunden sind.

Eine solche Wischereinrichtung hat den Vorteil, dass der Wischerabschnitt aufgrund gelenkigen Verbindung seiner Wände über die Gelenkeinrichtung leicht und ausreichend verformt werden kann, um einen geeigneten Wischerwinkel einzustellen. Zur entsprechenden Verformung des Wischerabschnitts reicht bereits eine geringe Reibungskraft bzw. Querkraft. Des Weiteren kann der Wischerabschnitt durch die gelenkige Verbindung seiner Wände definiert verformt werden, ohne dabei die Wände selbst stark zu deformieren, wie dies beispielsweise im Stand der Technik der Fall ist.

Gemäß der erfindungsgemäßen Ausführungsform bilden die Enden der jeweils über die Gelenkeinrichtung verbundenen Wände des Wischerabschnitts einen Spalt mit einem vorbestimmten Spaltwinkel.

Weitere bevorzugte Ausführungsformen sind in den Unteransprüchen beschrieben.

In einer Ausführungsform der Erfindung weist der Wischerabschnitt wenigstens einen Hohlraum auf, wobei wenigstens ein Begrenzungselement innerhalb des Hohlraums vorgesehen ist. Das Begrenzungselement ist derart ausgebildet, dass es den Wischerwinkel der jeweiligen Wischerlippe geeignet begrenzen kann, so dass eine gute Wischerleistung gewährleistet ist. Das Begrenzungselement verhindert, dass der Wischerwinkel zu klein wird bzw. die Wischerlippe zu stark gebogen wird.

In einer weiteren erfindungsgemäßen Ausführungsform sind eine, mehrere oder alle Wischerlippen an dem Wischerabschnitt angeformt oder als separate Teile an diesem befestigt. Das Anformen der Wischerlippen an den Wischerabschnitt hat den Vorteil, dass dies besonders einfach und kostengünstig in der Herstellung ist. Des Weiteren wird vorzugsweise auf einen jeweiligen Kippsteg verzichtet und stattdessen die Wischerlippe direkt mit dem Wischerabschnitt verbunden. Dadurch kann der Einfluss von Normalkräften auf die Bildung des Wischerwinkels reduziert werden.

Gemäß einer anderen erfindungsgemäßen Ausführungsform ist das Begrenzungselement derart ausgebildet, dass es den Wischerwinkel auf einen Wischerwinkel in einem Bereich von 45° bis 55° begrenzen kann. Dies hat den Vorteil, dass eine gute Wischerleistung zuverlässig gewährleistet werden kann.

In einer weiteren erfindungsgemäßen Ausführungsform weist der Wischerabschnitt beispielsweise eine kastenförmige Form bzw. eine kompakte Form auf.

Auf diese Weise ist der Wischerabschnitt weniger empfindlich gegenüber auftretenden Normalkräften.

In einer weiteren Ausführungsform ist der Spaltwinkel dabei derart gewählt, dass sich ein vorbestimmter minimaler Wischervvinkel ein-stellt, wenn der Spaltwinkel, durch das Verformen des Wischerabschnitts, am Ende Null wird. Dies hat den Vorteil, dass über den Spalt und dessen Spaltwinkel sehr einfach ein minimaler Wischerwinkel eingestellt werden kann, der von dem Wischerabschnitt nicht weiter unterschritten wird. Auf diese Weise kann mit wenig Aufwand ein optimales Wischergebnis gewährleistet werden.

In einer anderen erfindungsgemäßen Ausführungsform sind die jeweiligen Öffnung des Hohlraums in Form einer Ventileinrichtung ausgebildet. Die Ventileinrichtungen öffnen sich hierbei erst dann, wenn die Reibungskräfte ausreichend groß sind, die zwischen der zu wischenden Scheibe und dem Wischerabschnitt entstehen. Dabei wird der Hohlraum durch ein Verformen des Wischerabschnitts infolge der auftretenden Reibungskräfte ausreichend klein und der Druck im Inneren des Hohlraums ausreichend hoch zum Öffnen der Ventileinrichtungen. Auf diese Weise kann, ohne eine Anweisung des Fahrers an eine Wischereinrichtung, die Wischereinrichtung selbständig während des Wischervorgangs ein Reinigungsmedium auf die zu wischende Scheibe aufbringen.

In einer anderen erfindungsgemäßen Ausführungsform sind zwei Wischerlippen vorgesehen, wobei eine Wischerlippe jeweils eine Fahrzeugscheibe wischt während die zweite Wischerlippe als zusätzliche Sicherheits- oder Nachwischerlippe dient, wobei die Wischerlippen beispielsweise im Wesentlichen parallel zueinander anordenbar sind. Die zweite Wischerlippe hat den Vorteil, dass die Reinigung einer Scheibe weiter verbessert werden kann, durch das Nachwischen oder zusätzliche Wischen mittels der zweiten Wischerlippe.

Gemäß einer weiteren erfindungsgemäßen Ausführungsform ist der Wischerabschnitt mit einem Befestigungsabschnitt verbunden, zum Befestigen des Wischerblatts an einer Wischereinrichtung bzw. deren Wischerarm. Der Befestigungsabschnitt weist beispielsweise auf einer oder beiden Seiten eine oder mehrere Aussparungen auf, die im Wesentlichen in Längsrichtung verlaufen, zum Befestigen an einem Wischerarm. Diese Befestigung hat den Vorteil, dass sie einfach und kostengünstig in der Herstellung ist und ein sicheres Halten des Wischerblatts gewährleistet.

In einer weiteren erfindungsgemäßen Ausführungsform ist das Begrenzungselement beispielsweise in Form eines Vielecks, rund und/oder oval ausgebildet. Grundsätzlich kann die Form des Begrenzungselements beliebig ausgeführt werden, sofern der Wischerwinkel geeignet begrenzt werden kann. Des Weiteren können die Begrenzungselemente unterschiedliche Formen und/oder Befestigungen in dem Hohlraum des Wischerblatts aufweisen.

In einer anderen erfindungsgemäßen Ausführungsform ist ein Reinigungsmedium innerhalb des Hohlraums des Wischerabschnitts führbar und kann über entsprechende Öffnungen im Hohlraum abgegeben werden. In einer anderen Ausführungsform kann ein Reinigungsmedium unabhängig von dem Wischerblatt zugeführt werden, wobei der Hohlraum hierbei beispielsweise im Wesentlichen vollständig geschlossen ist. Dies hat den Vorteil, dass beispielsweise keine unerwünschten Stoffe in den Hohlraum gelangen können und dieser beispielsweise im Winter nicht vereisen und dadurch in seiner Funktion beeinträchtigt werden kann.

Ausführungsformen der Erfindung werden nachstehend anhand der schematischen Figuren der Zeichnung näher erläutert. Es zeigen:
Fig. 1 eine Profilansicht eines Wischerblatts in einer Ausgangsposition gemäß einer Ausführungsform der Erfindung, wobei ein Hohlraum des Wischerblatts einmal mit Reinigungsflüssigkeit gefüllt ist und einmal leer ist,
Fig. 2 das Wischerblatt gemäß Fig. 1 während eines Wischvorgangs,
Fig. 3 das Wischerblatt gemäß Fig. 2, wobei während des Wischvorgangs eine Wischerflüssigkeit abgegeben wird, wobei ein Hohlraum des Wischerblatts in der einen Profilansicht einmal mit Reinigungsflüssigkeit gefüllt ist und einmal leer ist,
Fig. 4 eine Profilansicht eines Wischerblatts gemäß einer alternativen Ausführungsform der Erfindung,
Fig. 5 das Wischerblatt gemäß Fig. 4 während eines Wischvorgangs.
Fig. 6 eine Profilansicht eines Wischerblatts gemäß einer weiteren alternativen Ausführungsform der Erfindung in einer Ausgangsposition,
Fig. 7 das Wischerblatt gemäß Fig. 6 während eines Wischvorgangs, wobei auf das Wischerblatt wirkende Kräfte dargestellt sind,
Fig. 8 ein Diagramm in welchem der Verlauf der Normalkraft entlang der Wischerblattlänge dargestellt ist, und
Fig. 9 eine Profilansicht eines Wischerblatts gemäß einer anderen alternativen Ausführungsform der Erfindung während eines Wischvorgangs.

In allen Figuren sind gleiche bzw. funktionsgleiche Elemente und Vorrichtungen - sofern nichts anderes angegeben ist - mit denselben Bezugszeichen versehen worden.

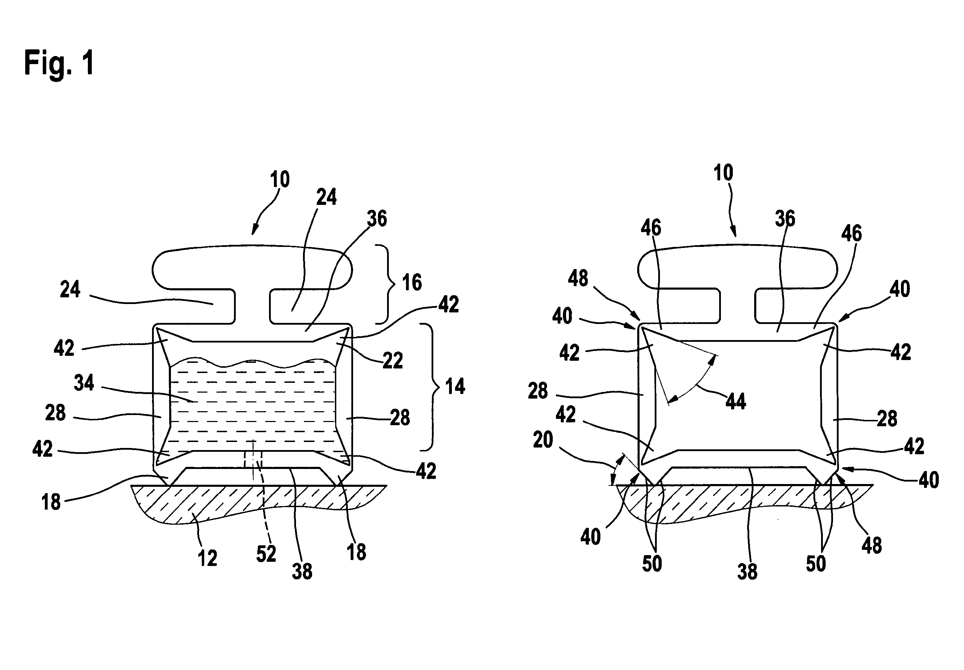

Ein Wischerblatt 10, wie es beispielsweise in den Fig. 1 bis 3 dargestellt ist, ist im Allgemeinen ein Element, das an einer Wischereinrichtung (nicht dargestellt) bzw. dessen Wischerarm anbringbar ist zum Reinigen von Scheiben 12. Solche Wischereinrichtungen werden beispielsweise zum Reinigen von Scheiben eines Fahrzeugs, wie beispielsweise eines PKW oder LKW usw., eingesetzt, um zwei Beispiele zu nennen. Ein Wischerarm (nicht dargestellt) der Wischereinrichtung an welchem das Wischerblatt 10 befestigt wird, kann das Wischerblatt 10 normalerweise an eine Scheibe 12, beispielsweise eine Windschutzscheibe, eines Fahrzeugs drücken.

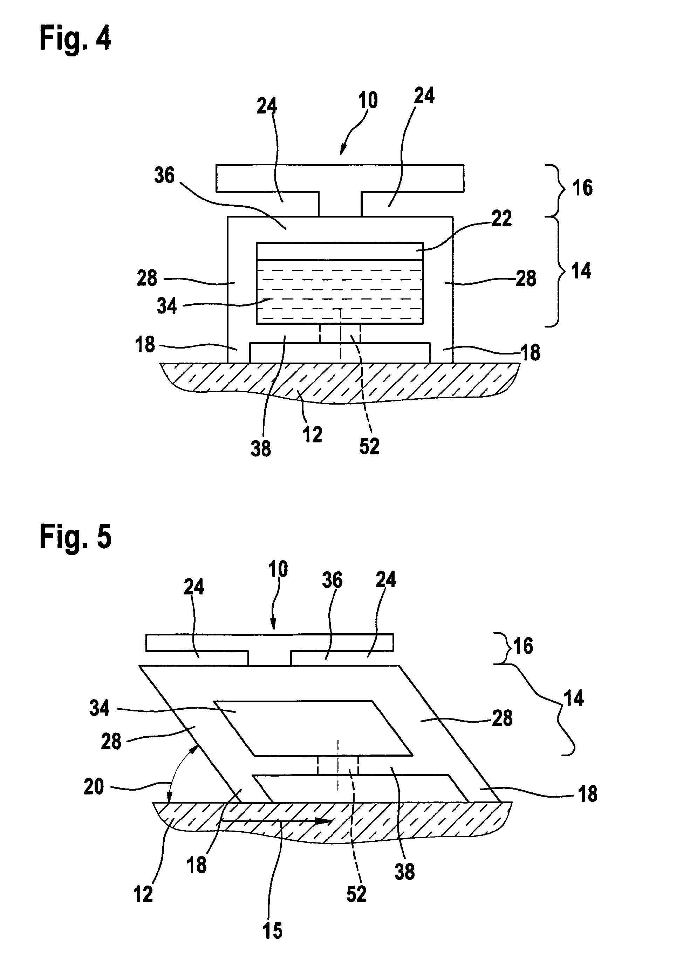

Das Wischerblatt 10 weist hierbei einen Wischerabschnitt 14 auf, mit einem kastenförmigen Profil, wie in Fig. 1, 2 und 3, sowie den nachfolgend beschriebenen Fig. 4-7 und 9 gezeigt ist, und einen Befestigungsabschnitt 16 zum Befestigen des Wischerblatts 10 an einer Wischereinrichtung.

Bisher tritt im Stand der Technik das Problem auf, dass ein Fahrer eine eigene Aktion durchführen muss, um Reinigungsflüssigkeit auf die Fahrzeugsscheibe 12 aufzusprühen. Die Dosierung des Reinigungsmittels 34 ist hierbei schwierig und es ist daher eine große Menge an Reinigungsflüssigkeit 34 notwendig. Ausgehend davon, dass das Gewicht bzw. das Volumen des Reinigungsflüssigkeitsreservoirs und dessen Inhalt ein wichtiger Aspekt sind, besteht ein Bedarf ein Wischerblatt 10 bereitzustellen, das selbständig bzw. autonom entscheidet, wann es das Reinigungsmittel 34 auf eine Scheibe 12 aufbringt und wann nicht, wie viel Reinigungsflüssigkeit 34 es aufbringt, wobei es so wenig Reinigungsflüssigkeit 34 wie möglich unnötig abgibt. Gemäß der erfindungsgemäßen Ausführungsform, wie sie in den Fig. 1, 2 und 3 gezeigt ist, wird nun das Wischerblatt 10 bereitgestellt, das die Reinigungsflüssigkeit 34 selbständig abgibt, wenn sie benötigt wird, ohne dass hierzu eine eigene Aktion des Fahrers notwendig ist.

In Fig. 1 ist das Wischerblatt 10 gemäß der erfindungsgemäßen Ausführungsform in einer Ausgangsposition gezeigt, in welcher keine Wischbewegung durchgeführt wird. Bei dem Wischerblatt 10 sind die Seiten bzw. die beiden Seitenwände 28, sowie die Oberseite 36 (obere Wand) und die Unterseite 38 (untere Wand) des Wischerabschnitts 14 über eine Gelenkeinrichtung 40 jeweils miteinander gelenkig verbunden.

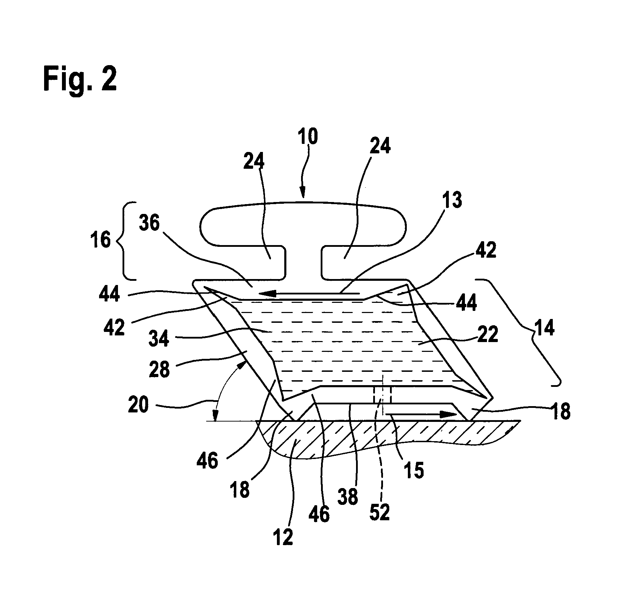

Die kastenförmige Form des Wischerabschnitts 14 weist eine geringe Steifigkeit bezüglich auftretender Reibkräfte bzw. Scherkräfte auf bzw. eine geringe Schubsteifigkeit (engl. shear stiffness). Die Seitenwände 28, sowie wahlweise zusätzlich die Oberseite 36 und Unterseite 38 selbst können hierbei jedoch fest bzw. starr sein oder auch flexible bzw. elastisch ausgebildet sein, da der Wischerabschnitt 14 aufgrund der Gelenkeinrichtungen 40 geeignet verformt werden kann bzw. dessen Querschnitt bzw. Volumen geeignet verändert werden kann. Aufgrund der niedrigen Steifigkeit gegenüber auftretenden Reibkräften ist eine entsprechend niedrige Reibkraft bzw. Querkraft zwischen dem Wischerblatt 10 und der Scheibe 12 ein Trigger bzw. Auslöser um einen optimalen Wischerwinkel 20 einzustellen, wie in Fig. 2 gezeigt ist. Ein optimaler Wischerwinkel 20 liegt vorzugsweise in einem Bereich zwischen 45° bis 55°.

Die beiden Seitenwände 28, sowie die Oberseite 36 und Unterseite 38, die über die jeweilige Gelenkeinrichtung 40 miteinander verbunden werden, sind derart ausgebildet, dass sie einen Spalt 42 bilden. Der Spalt 42 bildet dabei einen Spaltwinkel 44, der so dimensioniert ist, dass ein vorbestimmter geeigneter Wischerwinkel 20 eingestellt werden kann. Dabei sind z.B. die Seitenwände 28, sowie die Oberseite 36 und Unterseite 38, wie in den Fig. 1-3 gezeigt ist, beispielsweise jeweils an ihrem Ende 46 abgeschrägt. Die gegenüberliegenden abgeschrägten Flächen bzw. Enden 46 bilden dabei den Spalt 42 mit dem Spaltwinkel 44. Grundsätzlich kann der Spalt 42 aber auch jede andere beliebige Form aufweisen, z.B. abgerundet sein usw., sofern ein geeigneter Spaltwinkel 44 vorgesehen werden kann, der einen vorbestimmten Wischerwinkel 20 einstellen kann, beispielsweise einen minimalen, geeigneten Wischerwinkel 20.

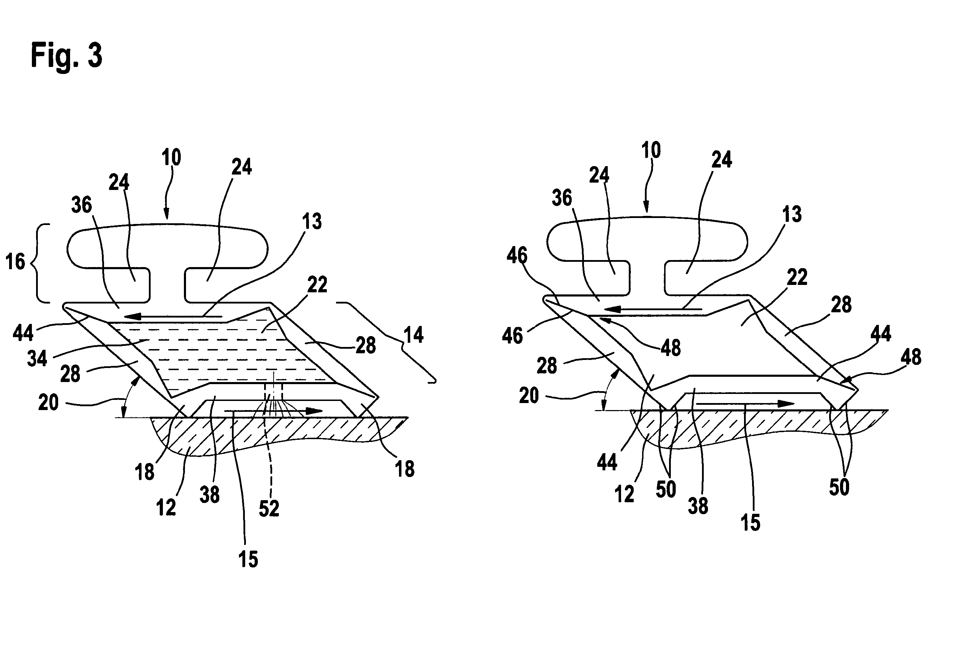

Bewegt sich das Wischerblatt 10 bei einem Wischvorgang, wie in den Fig. 2 und 3 gezeigt ist, so verschieben sich die Seitenwände 28 bzw. die Oberseite 36 verschiebt sich gegenüber der Unterseite 38 und bilden beispielsweise eine Art Parallelogramm. Dabei wird der Spaltwinkel 44 kleiner, wie in Fig. 2 gezeigt ist.

Schließlich wird der Spaltwinkel 44 Null, wie in Fig. 3 gezeigt ist. Hierbei treffen schließlich die Enden 46, hier z.B. die abgeschrägten Enden 46, der Seitenwände 28 bzw. der Oberseite 36 und Unterseite 38 an zwei gegenüberliegende Ecken 48 aufeinander und begrenzen hierbei im Wesentlichen die weitere Verformung des Wischerabschnitts 14, wobei sich z.B. ein minimaler, vorbestimmter optimaler Wischerwinkel 20 einstellt. Der minimale Wischerwinkel 20 kann hierbei in einem Bereich von 45° bis 55° liegen bzw. der Wischerwinkel 20 des Wischerblatts 10 kann beispielsweise auf einen minimalen Wischerwinkel 20 beschränkt werden, der nicht kleiner als beispielsweise 45°, 46°, 47°, 48°, 49°, 50°, 51 °, 52°, 53°, 54° oder 55° ist.

Durch den begrenzenden Spaltwinkel 44 ist der Wischerabschnitt 14 im Wesentlichen unabhängig von Normalkräften und sogar im Wesentlichen unabhängig von steigenden Reibungskräften. Der Spaltwinkel 44 in den beispielsweise vier Ecken 48 des Wischerabschnitts 14 bestimmt den optimalen Wischerwinkel 20 und fungiert als Begrenzung. Der Wischerwinkel 20 kann nicht kleiner werden als der vorbestimmte minimale Wischerwinkel 20.

Die beiden Wischerlippen 18 des Wischerabschnitts 14 können beispielsweise auf einer oder beiden Seiten entweder gerade (nicht dargestellt) oder mit abgeschrägten oder abgerundeten Seiten 50 ausgebildet sein, wie in den Fig. 1-3 gezeigt ist. Die Wischerlippen 18 sind dabei ohne einen Verbindungssteg an dem Wischerabschnitt 14 ausgebildet, beispielsweise einstückig oder als separate Teile. Des Weiteren weisen die Wischerlippen 18 eine Länge in einem Bereich von beispielsweise 0,5mm bis 1,0mm oder 0,5mm bis 1,5mm auf.

Die beiden Wischerlippen 18 können dabei auf einer oder beiden Seiten 50 so abgeschrägt sein, dass sie einen optimalen Wischerwinkel 20 beispielsweise in einem Bereich von 45° bis 55° bilden, einschließlich aller ganzzahligen Zwischenwerte. Statt zweier Wischerlippen 18 kann auch nur eine oder drei und mehr Wischerlippen 18 vorgesehen sein. Die Wischerlippe 18 oder Wischerlippen 18 reduzieren den Kontakt mit der Oberfläche der Scheibe 12, d.h. der Wischerabschnitt 14 liegt nur mit den Enden der jeweiligen Wischerlippe 18 an der Scheibe 12 auf.

Des Weiteren kann in dem Hohlraum 22 des Wischerabschnitts 14 wahlweise eine Reinigungsflüssigkeit 34 einfüllbar sein, zum Reinigen der Scheibe 12. Die Reinigungsflüssigkeit 34 kann dabei den Hohlraum 22 teilweise ausfüllen, wie in Fig. 1 gezeigt ist, oder vollständig ausfüllen. Hierbei ist an der Unterseite 38, zwischen beispielsweise zwei Wischerlippen 18 wenigstens eine Ventileinrichtung 52 vorgesehen, wie in den Fig. 1-3 stark vereinfacht und rein schematisch gezeigt ist. Dabei erstrecken sich vorzugsweise mehrere Ventileinrichtungen 52 entlang der Länge des Wischerblatts 10. Das Wischerblatt 10 ist in Fig. 1 in der Ausgangsposition oder Ruheposition gezeigt, in welcher keine Reibungskräfte wirken, dabei ist die Ventileinrichtung 52 im Wesentlichen geschlossen, so dass keine Reinigungsflüssigkeit 34 aus dem Hohlraum 22 nach außen tritt. Der Druck der durch die Reinigungsflüssigkeit 34 ausgeübt wird ist zu klein, um in der Ausgangsposition oder Ruheposition die Ventileinrichtung 52 zu öffnen.

Wird nun eine Wischbewegung ausgeführt, wie in Fig. 2 gezeigt ist, so entstehen hierbei Reibungskräfte zwischen dem Wischerblatt 10 bzw. dessen Wischerabschnitts 14 und der Scheibe 12. Das führt zu Scherkräften bzw. Querkräften an dem kastenförmigen oder boxförmigen Wischerabschnitt 14 und erzeugt einen Wischerwinkel 20. Hierbei wird der Hohlraum 22 des Wischerabschnitts 14 bzw. sein Volumen verkleinert, so dass er schließlich z.B. durch die Reinigungsflüssigkeit 34 vollkommen ausgefüllt ist. Dies führt dazu, dass der Druck in dem Hohlraum 22 steigt aber in der Position des Wischerblatts 10, wie in Fig. 2 gezeigt ist, beispielsweise noch nicht ausreichend groß ist, um die jeweilige Ventileinrichtung 52 zu öffnen. Durch die steigenden Reibungskräfte, beispielsweise in Folge von Schmutz auf der Scheibe 12, wird der Wischerabschnitt 14 weiter zusammengedrückt bzw. das Volumen des Hohlraums 22 weiter verkleinert. Dies führt dazu, dass der Druck der Reinigungsflüssigkeit 34 soweit in dem Hohlraum 22 ansteigt, dass der Wischerabschnitt 14 soweit verformt wird, bis er einen weiteren Wischerwinkel 20 erreicht, der im optimalen Bereich für den Wischerwinkel 20 liegt von z.B. 45° bis 55°. Der Wischerwinkel 20 kann beispielsweise der minimale, optimale Wischerwinkel 20 sein und z.B. 45° betragen oder auch 46°, 47°, oder 48° usw. betragen, um nur ein paar Beispiele zu nennen. Mit anderen Worten, die Reinigungsflüssigkeit 34 übt einen entsprechenden Druck auf die Ventileinrichtung 52 aus, der schließlich ausreichend groß wird, so dass die Ventileinrichtung 52 sich öffnet und die Reinigungsflüssigkeit 34 auf die Scheibe 12 aufgebracht wird bzw. aus dem Hohlraum 22 nach außen austritt, wie z.B. in Fig. 3 gezeigt ist.

Durch das Aufbringen bzw. Aufsprühen der Reinigungsflüssigkeit 34 kann wiederum die Reibung reduziert werden und das Austreten der Reinigungsflüssigkeit 34 kann entsprechend reduziert und schließlich ganz gestoppt werden. Durch das Reduzieren der Reibung vergrößert sich wiederum der Wischerwinkel 20 und der Wischabschnitt 14 nimmt wieder eine stabile Position ein, wie sie z.B. in Fig. 2 gezeigt ist, in welcher der Druck in dem Hohlraum 22 so weit wieder abgesunken ist, dass die Ventileinrichtung 52 sich schließt und keine Reinigungsflüssigkeit 34 nach außen abgegeben wird. Der Wischerwinkel 20 in Fig. 2 liegt dabei beispielsweise innerhalb des optimalen Bereichs für den Wischerwinkel 20 beispielsweise in einem Bereich größer 45° bis 55°. Mit anderen Worten, in Fig. 3, nimmt der Wischerabschnitt 20 z.B. einen minimalen, optimalen Wischerwinkel 20 ein, beispielsweise von 45°, während in Fig. 2 der Wischerwinkel 20 in einem immer noch optimalen Bereich beispielsweise zwischen größer 45° bis 55° liegt, z.B. bei 49°, 50°, 52° oder 55°. Des Weiteren kann der Wischerabschnitt 14 beispielsweise nach dem Zurückkehren in die Position in Fig. 2 erneut mit Reinigungsflüssigkeit 34 befüllt werden, um die verbrauchte Reinigungsflüssigkeit 34 zu ersetzen.

Das Wischerblatt 10 gemäß der erfindungsgemäßen Ausführungsform hat den Vorteil, dass die Reinigungsflüssigkeit 34, z.B. Wasser oder Wasser mit einem Reinigungszusatz, automatisch abgegeben wird, ohne dass hierfür eine gesonderte Aktion des Fahrers notwendig ist. Ist die Fahrzeugscheibe 12 dreckig, so ist die Reibung, die beim Wischen zwischen dem Wischerblatt 10 und der Scheibe 12 entsteht, höher als normal. Aufgrund der Gelenkeinrichtung 40 bzw. der niedrigen Steifigkeit der kastenförmigen Form des Wischerabschnitts 14 gegenüber Reibungskräften bzw. Querkräften (Scherkräften) wird der Wischerabschnitt 14 bei starker Reibung stärker verformt. Dabei wird das Volumen im Hohlraum 22 des Wischerabschnitts 14 verkleinert und der Druck steigt soweit an, dass schließlich die Ventileinrichtung 52 geöffnet wird. Wird die Reinigungsflüssigkeit 34 auf die schmutzige Scheibe 12 aufgesprüht, so sinkt die Reibung wiederum ab und damit auch der Grad der Verformung des Wischerabschnitts 14 und der Druck der Reinigungsflüssigkeit 34 in dem Wischerabschnitt 14. Durch den geringeren Druck wird die Ventileinrichtung 52 wieder geschlossen und es wird schließlich keine Reinigungsflüssigkeit 34 mehr auf die Scheibe 12 gesprüht. Das Wischerblattsystem gemäß der Erfindung ist dabei ein sich selbst regulierendes System. Außerdem wird die Reinigungsflüssigkeit 34 zwischen beispielsweise zwei Wischerlippen 18 gesprüht, so dass keine Reinigungsflüssigkeit 34 ungewollt verloren gehen kann.

In den Fig. 4 und 5 ist eine alternative Ausführungsform des Wischerblatts 10 dargestellt. Diese alternative Ausführungsform weist dabei im Wesentlichen den selben Aufbau auf wie die zuvor beschriebene Ausführungsform gemäß der Fig. 1-3. Die Ausführungen zu der vorherigen Ausführungsform gelten daher im Wesentlichen auch für die alternative Ausführungsform und werden nicht wiederholt.

Wie in Fig. 4 gezeigt ist, weist der Wischerabschnitt 14 des Wischerblatts 10 der alternativen Ausführungsform ebenfalls einen kastenförmigen Aufbau auf. Die Seitenwände 28 und wahlweise die Oberseite 36 und Unterseite 38 sind dabei flexibel gestaltet, so dass der Wischerabschnitt 14 soweit gebogen werden kann, wie in Fig. 5 gezeigt ist, wobei z.B. ein minimaler, optimaler Wischerwinkel 20 eingestellt werden kann. In Fig. 4 befindet sich das Wischerblatt 10 und sein Wischerabschnitt 14 in einer Ausgangsposition bzw. Ruheposition, in welcher der Hohlraum 22 des Wischerabschnitts 14 zumindest teilweise oder vollständig mit einer Reinigungsflüssigkeit 34 gefüllt ist.

Setzt nun der Wischvorgang ein, so wird der Wischerabschnitt 14 verformt bzw. die Oberseite 36 verschiebt sich zu der Unterseite 38 aufgrund von Reibung zwischen dem Wischerblatt 10 und der Scheibe 12. Hierbei bildet sich ein Wischerwinkel 20 aus der in einem Bereich von z.B. 45° bis 55° liegt. Durch die Verformung des Wischerabschnitts 14 verkleinert sich das Volumen des Hohlraums 22 des Wischerabschnitts 14. Dabei steigt der Druck im Inneren des Hohlraums 22, wobei der Druck in Fig. 5 noch nicht ausreichend hoch ist, um die Ventileinrichtung 52 auf der Unterseite des Wischerabschnitts 14 zu Öffnen.

Im Falle von z.B. Schmutz auf der Scheibe 12 erhöht sich die Reibung zwischen dem Wischerblatt 10 und der Scheibe 12. In diesem Fall wird der Wischerabschnitt 14 weiter verformt und das Volumen des Hohlraums 22 dabei weiter reduziert, bis der Druck im Inneren des Hohlraums 22 so groß wird, dass die Ventileinrichtung 52 geöffnet wird und die Reinigungsflüssigkeit 34 nach außen abgibt. Dabei wird auch der Wischerwinkel 20 weiter reduziert, beispielsweise bis zu einem minimalen, optimalen Wischerwinkel 20 vergleichbar der Darstellung in Fig. 3. Das Aufbringen der Reinigungsflüssigkeit 34 führt wiederum zu einer Reduzierung der Reibung und damit zu einer Reduzierung der Verformung des Wischerabschnitts 14 und zu einer Vergrößerung des Wischerwinkels 20. Hierbei nimmt der Druck im Inneren des Hohlraums 22 ab, so dass sich die Ventileinrichtung 52 wieder schließt und keine Reinigungsflüssigkeit 34 mehr abgegeben wird. Dadurch stellt die alternative Ausführungsform ebenfalls ein Wischerblatt 10 mit einem selbst regulierendem Reinigungsflüssigkeits-System dar. Der Wischerwinkel 20 wird dabei im Wesentlichen von entstehenden Reibungskräften bzw. Querkräften beeinflusst nicht aber von Normalkräften. Die Wände des Wischerabschnitts 14 können dabei auch über eine jeweilige Gelenkeinrichtung 40, wie in den Fig. 1-3, verbunden werden. In diesem Fall müssen die Wände nicht flexibel bzw. elastisch sein, sondern können auch fest bzw. starr sein, da der Wischerabschnitt aufgrund der Gelenkverbindung geeignet verformt werden kann.

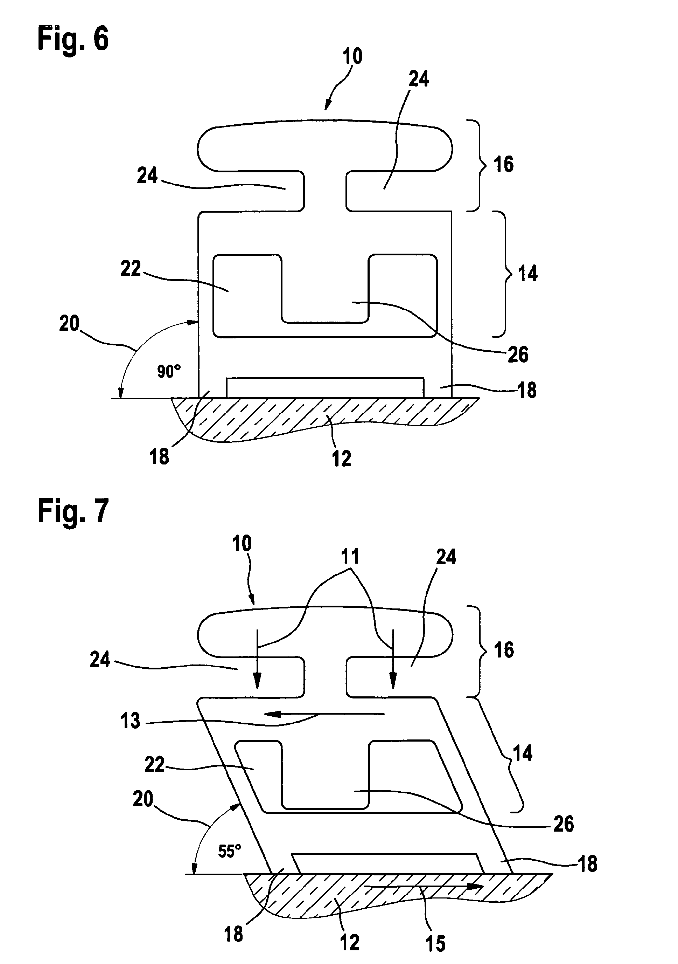

In den Fig. 6 und 7 ist eine weitere alternative Ausführungsform des Wischerblatts 10 dargestellt. Diese Ausführungsform unterscheide sich dabei von der zuvor beschriebenen Ausführungsform, dass Begrenzungselemente in dem Hohlraum des Wischerabschnitts vorgesehen sind.

Das Wischerblatt 10 befindet sich in der Darstellung in Fig. 6 in einer Ausgangsposition oder Ruheposition, in welcher keine Wischbewegung durchgeführt wird. In Fig. 7 ist das Wischerblatt 10 gemäß Fig. 6 dagegen während einer Wischbewegung dargestellt. Dabei ist einmal die Normalkraft 11 eingezeichnet und einmal die Querkraft 13, die auf Reibungskräften 15 basiert, die während der Wischbewegung des Wischerblatts 10 auftreten können.

Der Wischerwinkel 20, der notwendig ist um eine gute Wischerleistung zu erhalten, ist im vorliegenden Fall weitgehend un-abhängig von der Normalkraftverteilung entlang des Wischerblatts 10. Der Wischerwinkel 20 hängt daher im Wesentlichen nur von den Querkräften 13 ab, welche in diesem Falle auf den Reibkräften 15 zwischen dem Wischerblatt 10 und der Scheibe 12 basieren.

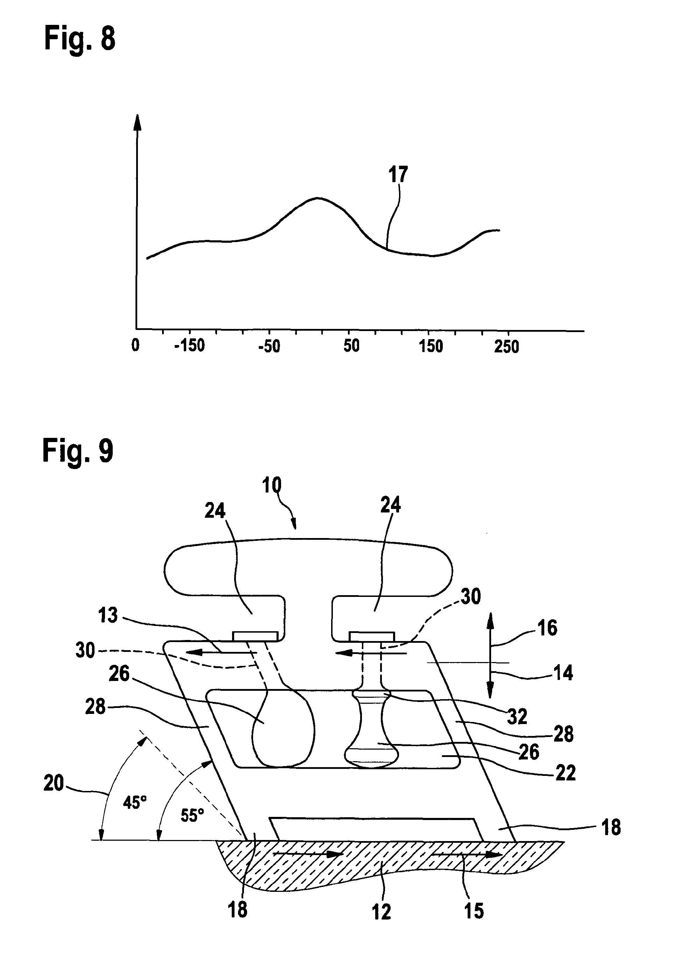

Das Wischerblatt 10 hat den Vorteil, dass es nicht empfindlich gegenüber der Normalkraftverteilung des Wischerblatts 10 ist. Ein Beispiel für eine solche Normalkraftverteilung 17 entlang der Länge des Wischerblatts 10 ist beispielhaft in Fig. 8 gezeigt. Dabei ist die Normalkraft (Senkrechte des Diagramms) über die Länge des Wischerblatts (Waagerechte des Diagramms) aufgetragen.

Derzeit weisen Wischerblattprofile schmale Wischerlippen auf, um eine Windschutzscheibe eines Fahrzeugs in einer Art hin- und her Bewegung zu wischen. Eine solche kleine Wischerlippe macht das Wischerblatt jedoch empfindlich gegenüber auftretenden Normalkräften. Die Normalkräfte wirken dabei auf den Wischer und können über die Länge des Wischerblatts variieren, wie beispielhaft in Fig. 8 gezeigt ist.

Die Normalkraftverteilung ist ein sehr wichtiger Parameter bezüglich des Verhaltens bzw. der Leistung des Wischerblatts. Das Wischerblatt ist nur für einen begrenzten Bereich für Normalkräfte ausgebildet. Größere Normalkräfte führen dazu, dass die Wischerlippe zu stark gebogen wird. Bei niedrigen Normalkräften wird die Wischerlippe dagegen kaum gebogen bzw. bleibt zu gerade bzw. zu senkrecht zu der Windschutzscheibe eingestellt, was wiederum zu einer schlechteren Wischerleistung führt.

Aufgrund der kastenförmigen bzw. beispielsweise im Wesentlichen viereckigen bzw. quadratischen oder rechteckigen Form ist das Wischerblatt 10 dagegen verhältnismäßig unempfindlich gegenüber Normalkräften 11, die auf das Wischerblatt 10 einwirken. Der Wischerwinkel 20, welcher notwendig ist um eine gute Wischerleistung zu erzielen, ist hierbei im Wesentlichen bzw. nahezu unabhängig von der Normalkraftverteilung. Stattdessen hängt der Wischerwinkel 20 im Wesentlichen nur von den Querkräften 13 ab. Die Querkräfte 13 werden dabei durch die Reibkräfte 15 zwischen den Wischerlippen 10 und der Scheibe 12, z.B. Windschutzscheibe, gebildet. Aufgrund der Form weist der Wischer eine geringere Steifigkeit gegenüber auftretenden Reibkräften auf. Die Reibkräfte können somit den notwendigen Wischerwinkel 20 erzeugen.

Die kastenförmige Form des Wischerblatts 10 bzw. dessen Wischerabschnitts 14 weist des Weiteren beispielsweise ein, zwei oder mehr Wischerlippen 18 auf. In der alternativen Ausführungsform des Wischerblatts 10 sind beispielsweise zwei Wischerlippen 18 vorgesehen, die an dem Wischerabschnitt 14 direkt ausgebildet bzw. angeformt sind, ohne einen Kippsteg- oder Verbindungsabschnitt, wie bei den Wischerblättern im Stand der Technik. Alternativ ist es auch möglich die Wischerlippen 18 als separate Teile (nicht dargestellt) an dem Wischerabschnitt 14 des Wischerblatts 10 zu befestigen, wobei ebenfalls vorzugsweise auf einen Kippsteg- oder Verbindungsabschnitt zwischen Wischerlippe 18 und Wischerabschnitt 14 verzichtet wird. Die jeweilige Wischerlippe 18 weist hierbei vorzugsweise eine Länge in einem Bereich von 0,5mm bis 1,0mm oder in einem Bereich von 0,5mm bis 1,5mm auf. Die Wischerlippe ist dabei ausreichend kurz, so dass kaum Eis oder Schnee zwischen die beiden Wischerlippen 18 gelangt. Die Erfindung ist aber nicht auf diese bevorzugte Länge der Wischerlippe beschränkt. Grundsätzlich kann die Wischerlippe auch länger als 1,5mm sein. Mit zunehmender Länge kann hierbei mehr Eis und Schnee zwischen die Wischerlippen gelangen.

Ein Vorteil ist, dass das Wischerblatt 10, eine gute Winterleistung unter Bedingungen wie Eis und Schnee aufweist, da kaum Eis oder Schnee zwischen die kurzen Wischerlippen 18 gelangen kann. Außerdem weist der Wischerabschnitt 14 einen Hohlraum 22 auf, in welchen kein Eis oder Schnee eindringen kann.

Derzeitige Wischerblattprofile haben dagegen einen Hals oder kurzen Kippsteg die mit den Wischerlippen verbunden sind und weisen außerdem eine entsprechende Aussparung auf, zum Wischen einer Windschutzscheibe in einer Hin- und Herbewegung. In dem Fall, indem die Aussparung mit Schnee und/oder Eis gefüllt ist, ist jedoch ein sog. "Flip-over" bzw. ein Umkehren des Wischerblatts sowie eine gute Wischerleistung nicht mehr möglich. Das kastenförmige Wischerblatt 10 hat dagegen nur zwei kurze Wischerlippen 18 und weist keine Aussparungen auf, die mit Schnee oder Eis verstopft werden könnten, so dass hierdurch die Wischerleistung nicht beeinträchtigt wird.

Ein anderer Vorteil des Wischerblatts 10 ist die niedrige "Flip-over" Geräuschleistung bzw. Geräuschleistung bei der Umkehrung der Wischerrichtung. Bei derzeitigen Wischerblattprofilen kann jedoch eine Schulter oder eine Streifleiste in Umkehrpunkten die Scheibe kontaktieren, was zu einem störenden "Flip-over" Geräusch führt. Bei der kastenförmigen Form des erfindungsgemäßen Wischerblatts 10 kommt es jedoch zu keinem solchen Kontakt bei den Umkehrpunkten, so dass das "Flip-over" Geräusch reduziert werden kann.

Wie in der alternativen Ausführungsform in den Fig. 6 und 7 gezeigt ist, weist das erfindungsgemäße Wischerblatt 10 beispielsweise zwei Wischerlippen 18 auf, die zum Beispiel entlang des Wischerblatts 10 im Wesentlichen parallel angeordnet sind. Ein weiterer Vorteil des Wischerblattes 10 ist hierbei, dass die jeweilige zweite Wischerlippe 18 als ein zweiter sog. "back-up" oder Sicherungswischer eingesetzt werden kann. Abhängig von der Wischerrichtung ist eine Wischerlippe 18 dabei zuständig für das Wischen der Windschutzscheibe 12. Die zweite Wischerlippe 18 kann wiederum als zusätzlicher Sicherungswischer oder Nachwischer dienen.

Das erfindungsgemäße Wischerblatt 10 weist des Weiteren, wie zuvor beschrieben, einen Kopfbereich bzw. den Befestigungsabschnitt 16 auf, um das Wischerblatt 10 an einer Wischereinrichtung bzw. einem Wischerarm zu befestigen. Der Befestigungsabschnitt 16 weist beispielsweise auf jeder Seite oder nur auf einer Seite wenigstens eine durchgehende oder mehrere Aussparungen 24 in Längsrichtung des Wischerblatts 10 auf, um das Wischerblatt 10 an einem entsprechenden Träger einer Wischereinrichtung zu befestigen, beispielsweise einem Wischerarm. Grundsätzlich kann aber auch jede andere Art der Befestigung vorgesehen sein bzw. als Befestigungsabschnitt ausgebildet sein, um das Wischerblatt 10 an einer Wischereinrichtung zu befestigen. Die Darstellung in Fig. 6 und 7 ist lediglich beispielhaft.

Um nun den Wischerwinkel 20 zu beschränken weist der Wischerabschnitt 14 beispielsweise wenigstens einen Hohlraum 22 auf. Die Wände des Hohlraums 22 bzw. des Wischerabschnitts 14 sind dabei direkt miteinander verbunden bzw. einstückig ausgebildet. Alternativ können die Wände aber auch wie in der ersten Ausführungsform, wie sie in den Fig. 1-3 dargestellt ist, über eine Gelenkeinrichtung miteinander verbunden werden und wahlweise zusätzlich jeweils einen Spalt mit einem vorbestimmten Spaltwinkel bilden. Die Gelenkeinrichtung kann dabei einstückig mit den Wänden ausgebildet sein oder als separates Teil jeweils zwei Wände miteinander verbinden. Wahlweise können bei einer zusätzlichen Befüllung des Hohlraums 22 mit einem Reinigungsmedium zusätzlich ein, zwei oder eine Vielzahl von Ventileinrichtungen bzw. Öffnungen in dem Wischerabschnitt 14 entlang des Wischerblatts vorgesehen werden, über die das Reinigungsmedium aus dem Hohlraum auf die Scheibe abgegeben werden kann, wie zuvor mit Bezug auf die Fig. 1-3 beschrieben wurde.

In dem Hohlraum 22 können hierbei des Weiteren wenigstens ein oder mehrere Begrenzungselemente 26 angeordnet sein, zum Begrenzen des Wischerwinkels 20, so dass der Wischerwinkel 20 beispielsweise nicht zu klein wird und die Wischerleistung dadurch beeinträchtigt werden kann.

Das Begrenzungselement 26 kann dabei z.B. in Form eines Zapfens oder Stempels ausgebildet sein und beispielsweise in dem Hohlraum 22 des Wischerabschnitts 14 als separates Teil befestigt sein, wie in nachfolgender Fig. 9 gezeigt ist, oder einteilig angeformt oder ausgebildet sein, wie in den Fig. 6 und 7 gezeigt ist. Das Begrenzungselement 26 ist beispielsweise im Inneren des Hohlraums 22 von einer gegenüberliegenden Wand des Hohlraums 22 beabstandet, wenn das Wischerblatt 10 sich in einem Ausgangszustand befindet, in welchem keine Kräfte auf das Wischerblatt 10 wirken. Grundsätzlich kann das Begrenzungselement 26 aber auch an der gegenüberliegenden Wand des Hohlraums 22 anliegend ausgebildet sein.

Bei einer Wischerbewegung des Wischerblatts 10 kann nun das Begrenzungselement 26 so in dem Hohlraum 22 angedrückt werden, dass der Wischerwinkel 20 des Wischerblatts 10 im Wesentlichen beschränkt wird beispielsweise auf einen Wischerwinkel 20 der nicht kleiner als beispielsweise 45°, 46°, 47°, 48°, 49°, 50°, 51°, 52°, 53°, 54° oder 55° ist. Das Begrenzungselement beschränkt hierbei geeignet die Verformung bzw. Durchbiegung des Wischerblatts 10 und seiner Wischerlippen 18, wie beispielsweise auch in Fig. 9 angedeutet ist.

Die Seitenwände 28 des kastenförmigen Wischerabschnitts 14 können dabei beispielsweise geeignet dünn ausgebildet werden, um die Steifigkeit gegenüber auftretenden Reibkräften 15 zu reduzieren, so dass niedrigere Reibkräfte 15 einen notwendigen Wischerwinkel 20 erzeugen können, um eine gute Wischerleistung zu erzielen. Aufgrund seiner Kastenform und seiner kurzen Wischerlippen 18 ist das Wischerblatt 10 nicht empfindlich gegenüber Normalkräften 11, wie zuvor beschrieben wurde. Das Begrenzungselement 26 in dem Hohlraum 22 des kastenförmigen Wischabschnitts 14 beschränkt die Deformation aufgrund der Reibung und begrenzt damit zusätzlich den Wischerwinkel 20 auf einen Wert in einem Bereich von vorzugsweise 45° bis 55°. Grundsätzlich kann der Wischerwinkel 20 auch kleiner als 45° oder größer als 55° gewählt werden, je nachdem welcher maximal zulässige Wischerwinkel 20 gewünscht wird, abhängig beispielsweise von Funktion und Einsatzzweck. Ein Wischerwinkel in einem Bereich von 45° bis 55° ist jedoch vorteilhaft.

In Fig. 9 ist eine weitere alternative Ausführungsform des Wischerblatts 10 dargestellt. Die alternative Ausführungsform unterscheidet sich dabei von der zuvor mit Bezug auf die Fig. 6 und 7 beschriebenen Ausführungsform dadurch, dass beispielsweise zwei Begrenzungselemente 26 vorgesehen sind, die statt einer eckigen eine gebogene Form bzw. eine Art Pilzform aufweisen. Des Weiteren sind die beiden Begrenzungselemente 26 als separate Teile an dem Wischerabschnitt 14 befestigt bzw. in dessen Hohlraum 22. Dabei können die Begrenzungselemente 26 beispielsweise durch Öffnungen 30 in den Hohlraum 22 eingeführt werden und an diesem einrasten oder einhaken. Ein Begrenzungselement 26 ist dabei beispielsweise rund oder keulenförmig ausgebildet. Das andere Begrenzungselement 26 hat dagegen eine Halsmanschette 32 zum Fixieren in der Öffnung 30 des Hohlraums 22 und einen unteren Stempelabschnitt.

Die Form der Begrenzungselemente 26 kann beliebig variiert werden, sofern die Verformung des Hohlraums 22 geeignet begrenzt werden kann und der Wischerwinkel 20 dabei geeignet eingestellt werden kann. Dies gilt für alle Ausführungsformen. Wie in Fig. 9 schematisch und stark vereinfacht dargestellt ist, kann der Wischerwinkel 20 beispielsweise auf einen Bereich von maximal 45° begrenzt werden. Grundsätzlich kann aber auch ein kleinerer Wischerwinkel 20 als 45° oder ein größerer Wischerwinkel 20 als 55° gewählt werden, je nachdem für welchen Wischerwinkel 20 beispielsweise noch eine gute bzw. gewünschte Wischerleistung erzielt werden kann. Wie zuvor beschrieben dient das Begrenzungselement 26 dazu die Verformung des Wischerabschnitts 14 aufgrund von Reibungskräften zu beschränkten und hierbei auch den Wischerwinkel 20 zu beschränken.

Die zuvor gemachten Ausführungen zu der Ausführungsform gemäß Fig. 6 und 7 gelten auch entsprechend für die Ausführungsform gemäß Fig. 9 und werden hier nicht wiederholt. Grundsätzlich können die zuvor beschriebenen Ausführungsformen mit Bezug auf die Fig. 1 bis 9 auch miteinander kombiniert werden. Dabei können insbesondere bei den Ausführungsformen gemäß der Fig. 4, 5, 6, 7 und 9 die Wände des Wischerabschnitts 14 auch über eine jeweilige Gelenkeinrichtung 40 miteinander verbunden werden, wie in der erfindungsgemäßen Ausführungsform gemäß der Fig. 1, 2 und 3. Die Wände des Wischerabschnitts 14 können hierdurch auch fest bzw. starr ausgebildet sein, da die Verformung des Wischerabschnitts und seines Hohlraums durch die Gelenkverbindungen erreicht wird. Grundsätzlich können die Wände aber auch flexibel bzw. elastisch sein. Dabei kann wahlweise außerdem jeweils ein zusätzlicher Spalt mit einem vorbestimmten Spaltwinkel 44 zwischen den miteinander verbundenen Enden der Wände vorgesehen werden. Die Ausführungen zu der Gelenkeinrichtung in Bezug auf die Fig. 1, 2 und 3 gelten entsprechend auch für alle anderen Ausführungsformen, die mit einer solchen Gelenkeinrichtung versehen werden können und werden daher nicht wiederholt. Entsprechend kann neben der Gelenkeinrichtung wenigstens eine Ventileinrichtung zwischen zwei Wischerlippen in dem Wischerabschnitt vorgesehen werden zum Abgeben einer Reinigungsflüssigkeit, wenn der Hohlraum mit einer solchen zusätzlich befüllt ist. Dabei sind ein, zwei oder eine Vielzahl von Ventileinrichtungen entlang der Länge des Wischerblatts in dem Wischerabschnitt vorgesehen zum Abgeben der Reinigungsflüssigkeit, die in dem Hohlraum des Wischerabschnitts vorgesehen ist. Dies gilt nicht nur für die Ausführungsform gemäß der Fig. 1, 2 und 3 sondern kann bei allen anderen Ausführungsformen gemäß der Fig. 4-9 ebenfalls vorgesehen werden.

Des Weiteren können die Begrenzungselemente 26 miteinander kombiniert werden. In der Ausführungsform gemäß der Fig. 6 und 7 ist beispielsweise ein Begrenzungselement 26 vorgesehen, das im Wesentlichen in Längsrichtung bzw. entlang der Länge des Wischerblatts 10 im Inneren des Hohlraums 22 verläuft. Es ist grundsätzlich möglich beispielsweise partiell oder durchgehend zusätzliche Begrenzungselemente 26 wie in Fig. 9 vorzusehen. Des Weiteren kann das Begrenzungselement 26 in der Ausführungsform, wie es in den Fig. 6 und 7 dargestellt ist, über die Länge und/oder Breite des Wischerblatts 10 in seiner Form konstant sein oder variieren, je nach auftretenden Kräften, um so über die Länge den Wischerwinkel 20 optimal zu begrenzen. Des Weiteren kann das Begrenzungselement 26 statt durchgehend entlang der Länge des Wischerblatts 10 ausgebildet zu sein auch Unterbrechungen aufweisen, je nach Funktion und Einsatzzweck. Des Weiteren können beliebig viele Begrenzungselemente 26 vorgesehen werden, beispielsweise auf der selben Seite des Hohlraums 22 oder auf gegenüberliegenden Seiten des Hohlraums 22, sofern dadurch der Wischerwinkel 20 geeignet begrenzt werden kann. Dies gilt für alle Ausführungsformen der Erfindung.

Darüber hinaus kann eine Reinigungsflüssigkeit innerhalb des Hohlraums 22 geführt werden, die über entsprechende Öffnungen (nicht dargestellt) bzw. Ventileinrichtungen 52 in dem Wischerabschnitt nach außen zum Reinigen der Scheibe 12 abgegeben werden kann. Alternativ kann in dem Hohlraum 22 auch kein Reinigungsmedium geführt werden und die Reinigungsflüssigkeit unabhängig von dem Wischerblatt 10 einer zu wischenden Scheibe 12 zugeführt werden. In diesem Fall muss der Hohlraum 22 keine Öffnungen bzw. der Wischerabschnitt keine Ventileinrichtungen aufweisen zum Abführen von Reinigungsflüssigkeit. Es können aber auch beide Möglichkeiten miteinander kombiniert werden. Das heißt, es wird Reinigungsflüssigkeit in dem Hohlraum 22 geführt und über entsprechende Öffnungen aus dem Hohlraum 22 abgegeben. Des Weiteren kann eine zusätzlich Reinigungsflüssigkeit separat der Scheibe 12 zugeführt werden, unabhängig von dem Wischerblatt 10.

Das erfindungsgemäße Wischblatt 10 weist außerdem z.B. ein verformbares bzw. elastisches Material auf, beispielsweise ein Gummimaterial oder eine Kombination von Gummimaterialien. Dies gilt für alle Ausführungsformen. Des Weiteren sind die Gelenkeinrichtungen 40 der Ausführungsform gemäß der Fig. 1-3 beispielsweise mit den Seitenwänden 28 und der Ober- und Unterseite 36, 38 des Wischerabschnitts 14 einstückig ausgebildet und z.B. so dünn ausgebildet, so dass sie gebogen werden können. Die Gelenkeinrichtungen 40 können aber auch aus einem anderen Material gefertigt sein als die Seitenwände 28 und die Ober- und Unterseite 36, 38, wobei das Material ermöglicht, dass die Gelenkeinrichtungen 40 ausreichend gebogen werden können. Des Weiteren kann die Steifigkeit der Seitenwand 28 und der Oberseite 36 und Unterseite 38 in der Ausführungsform gemäß der Fig. 1-3 z.B. auch dadurch erreicht werden, dass ein Gummimaterial in diesem Bereich einfach entsprechend dicker ausgebildet wird und dadurch die Wände beispielsweise im Wesentlichen starr bzw. fest sind. In der Ausführungsform gemäß der Fig. 8 und 9 können die Wände 28, 36, 38 des Wischerabschnitts 14 derart ausgebildet sein, dass ihre Dicke derart ist, dass der Wischerabschnitt 14 geeignet flexibel bleibt und verformt werden kann, so dass die Oberseite 36 und Unterseite 38 gegeneinander verschoben werden können, um den Hohlraum 22 im Inneren ausreichend zu verkleinern. Weiter kann die jeweilige Ventileinrichtung 52 in den Ausführungsformen als separates Teil ausgebildet sein oder als Teil z.B. der Unterseite 38 des Wischerabschnitts 14 ausgebildet sein. Die zuvor beschriebenen Ausführungsformen sind miteinander kombinierbar, insbesondere einzelne Merkmale davon.

## Patentansprüche

1. Wischerblatt für eine Wischereinrichtung eines Fahrzeugs zum Wischen von Fahrzeugscheiben, wobei
das Wischerblatt (10) einen Wischerabschnitt (14) mit einem Hohlraum (22) aufweist, wobei die Wände (28, 36, 38) des Wischerabschnitts (14) über eine Gelenkeinrichtung (40) jeweils miteinander verbunden sind, **dadurch gekennzeichnet, dass** die Enden (46) der jeweils über die Gelenkeinrichtung (40) verbundenen Wände (28, 36, 38) einen Spalt (42) mit einem vorbestimmten Spaltwinkel (44) bilden.

2. Wischerblatt nach Anspruch 1, **dadurch gekennzeichnet**, die Gelenkeinrichtung (40) einteilig mit den zu verbindenden Wänden (28, 36, 38) ausgebildet ist oder als separates Teil mit diesen verbunden ist.

3. Wischerblatt nach einem der Ansprüche 1 oder 2, **dadurch gekennzeichnet**, wenigstens ein oder zwei Wischerlippen (18) an dem Wischerabschnitt (14) vorgesehen sind

4. Wischerblatt nach einem der Ansprüche 1 bis 3, **dadurch gekennzeichnet, dass** wenigstens ein oder mehrere Begrenzungselemente (26) innerhalb des Hohlraums (22) vorgesehen sind, zum Begrenzen eines Wischerwinkels.

5. Wischerblatt nach einem der Ansprüche 1 bis 4, **dadurch gekennzeichnet, dass** der Spaltwinkel (44) derart gewählt ist, dass ein vorbestimmter minimaler Wischerwinkel (20) einstellbar ist, wobei der minimale Wischerwinkel in einem Bereich von 45° bis 55° liegt.

6. Wischerblatt nach wenigstens einem der Ansprüche 1 bis 5, **dadurch gekennzeichnet, dass** die Wände (28, 36, 38) des Wischerabschnitts (14) starr bzw. fest oder flexibel ausgebildet sind.

7. Wischerblatt nach wenigstens einem der Ansprüche 3 bis 6, **dadurch gekennzeichnet, dass** ein, mehrere oder alle Wischerlippen (18) an dem Wischerabschnitt (14) angeformt sind oder als separate Teile an diesem befestigt sind, wobei die jeweilige Wischerlippe (18) auf einer oder beiden Seiten (50) abgeschrägt ausgebildet ist und einen vorbestimmten Wischerwinkel (20) bildet.

8. Wischerblatt nach wenigstens einem der Ansprüche 3 bis 7, **dadurch gekennzeichnet, dass** die Wischerlippen (18) eine Länge in einem Bereich von 0,5mm bis 1,0mm oder in einem Bereich von 0,5mm bis 1,5mm aufweist.

9. Wischerblatt nach wenigstens einem der Ansprüche 1 bis 8, **dadurch gekennzeichnet, dass** der Wischerabschnitt (14) eine kastenförmige Form bzw. eine rechteckige oder viereckige Form aufweist.

10. Wischerblatt nach wenigstens einem der Ansprüche 4 bis 9, **dadurch gekennzeichnet, dass** das Begrenzungselement (26) den Wischerwinkel (20) auf einen Wischerwinkel (20) in einem Bereich von 45° bis 55° begrenzt.

11. Wischerblatt nach wenigstens einem der Ansprüche 4 bis 10, **dadurch gekennzeichnet, dass** das Begrenzungselement (26) im Inneren des Hohlraums (22) angeformt oder als separates Teil angebracht ist.

12. Wischerblatt nach wenigstens einem der Ansprüche 1 bis 11, **dadurch gekennzeichnet, dass** der Wischerabschnitt (14) mit einem Befestigungsabschnitt (16) verbunden ist, zum Befestigen des Wischerblatts (10) an einer Wischereinrichtung bzw. deren Wischerarm.

13. Wischerblatt nach wenigstens einem der Ansprüche 1 bis 12, **dadurch gekennzeichnet, dass** ein Reinigungsmedium innerhalb des Hohlraums (22) des Wischerabschnitts (14) führbar ist und über entsprechende Öffnungen (52) im Hohlraum (22) abgegeben werden kann und/oder ein Reinigungsmedium unabhängig von dem Wischerblatt (10) zuführbar ist, wobei der Hohlraum (22) Öffnungen (52) aufweist oder geschlossen ausgebildet ist.

14. Wischerblatt nach Anspruch 13, **dadurch gekennzeichnet, dass** die jeweilige Öffnung in Form einer Ventileinrichtung (52) ausgebildet ist, wobei die Ventileinrichtung (52) geöffnet wird, um ein Reinigungsmedium (34) aus einem Hohlraum (22) des Wischerabschnitts (14) abzugeben, wenn der Wischerabschnitt (14) einen vorbestimmten Wischerwinkel (20) einnimmt bzw. wenn der Wischerwinkel (20) des Wischerabschnitts (14) in einem vorbestimmten Wischerwinkelbereich ist.

## Claims

1. Wiper blade for a wiper device of a vehicle for wiping vehicle screens, wherein the wiper blade (10) has a wiper section (14) with a cavity (22), and wherein the walls (28, 36, 38) of the wiper section (14) are in each case connected to one another via an articulation device (40), **characterized in that** the ends (46) of the walls (28, 36, 38) which are in each case connected via the articulation device (40) form a gap (42) with a predetermined gap angle (44).

2. Wiper blade according to Claim 1, **characterized in that** the articulation device (40) is formed integrally with the walls (28, 36, 38) to be connected or is connected to said walls as a separate part.

3. Wiper blade according to either of Claims 1 and 2, **characterized in that** at least one or two wiper lips (18) are provided on the wiper section (14).

4. Wiper blade according to one of Claims 1 to 3, **characterized in that** at least one or more limiting elements (26) are provided within the cavity (22) in order to limit a wiper angle.

5. Wiper blade according to one of Claims 1 to 4, **characterized in that** the gap angle (44) is selected in such a manner that a predetermined minimum wiper angle (20) can be set, wherein the minimum wiper angle lies within a range of 45° to 55°.

6. Wiper blade according to at least one of Claims 1 to 5, **characterized in that** the walls (28, 36, 38) of the wiper section (14) are of rigid or fixed or flexible design.

7. Wiper blade according to at least one of Claims 3 to 6, **characterized in that** one or more or all of the wiper lips (18) are integrally formed on the wiper section (14) or are fastened to the latter as separate parts, wherein each wiper lip (18) is of bevelled design on one or both sides (50) and forms a predetermined wiper angle (20).

8. Wiper blade according to at least one of Claims 3 to 7, **characterized in that** the wiper lips (18) have a length within a range of 0.5 mm to 1.0 mm or within a range of 0.5 mm to 1.5 mm.

9. Wiper blade according to at least one of Claims 1 to 8, **characterized in that** the wiper section (14) is in the shape of a box or has a rectangular or square shape.

10. Wiper blade according to at least one of Claims 4 to 9, **characterized in that** the limiting element (26) limits the wiper angle (20) to a wiper angle (20) within a range of 45° to 55°.

11. Wiper blade according to at least one of Claims 4 to 10, **characterized in that** the limiting element (26) is integrally formed in the interior of the cavity (22) or is provided as a separate part.

12. Wiper blade according to at least one of Claims 1 to 11, **characterized in that** the wiper section (14) is connected to a fastening section (16) for fastening the wiper blade (10) to a wiper device or to the wiper arm thereof.

13. Wiper blade according to at least one of Claims 1 to 12, **characterized in that** a cleaning medium can be guided within the cavity (22) of the wiper section (14) and can be discharged via corresponding openings (52) in the cavity (22), and/or a cleaning medium can be supplied independently of the wiper blade (10), wherein the cavity (22) has openings (52) or is of closed design.

14. Wiper blade according to Claim 13, **characterized in that** each opening is designed in the form of a valve device (52), wherein the valve device (52) is opened in order to discharge a cleaning medium (34) from a cavity (22) of the wiper section (14) when the wiper section (14) takes up a predetermined wiper angle (20) or when the wiper angle (20) of the wiper section (14) is within a predetermined wiper angle range.

## Revendications

1. Balai d'essuie-glace pour une installation d'essuie-glace d'un véhicule pour balayer des vitres de véhicule,
le balai d'essuie-glace (10) comprenant une section d'essuie-glace (14) comprenant un espace creux (22), les parois (28, 36, 38) de la section d'essuie-glace (14) étant reliées respectivement les unes aux autres par un dispositif d'articulation (40), **caractérisé en ce que** les extrémités (46) des parois (28, 36, 38) reliées respectivement par le dispositif d'articulation (40) forment une fente (42) présentant un angle de fente (44) prédéterminé.

2. Balai d'essuie-glace selon la revendication 1, **caractérisé en ce que** le dispositif d'articulation (40) est réalisé d'une seule pièce avec les parois (28, 36, 38) devant être reliées ou est relié à celles-ci en tant que partie séparée.

3. Balai d'essuie-glace selon la revendication 1 ou 2, **caractérisé en ce qu'**au moins une ou deux lèvres de balai d'essuie-glace (18) sont prévues sur la section d'essuie-glace (14).

4. Balai d'essuie-glace selon l'une quelconque des revendications 1 à 3, **caractérisé en ce qu'**au moins un ou plusieurs éléments de limitation (26) sont prévus à l'intérieur de l'espace creux (22) pour limiter un angle d'essuie-glace.

5. Balai d'essuie-glace selon l'une quelconque des revendications 1 à 4, **caractérisé en ce que** l'angle de fente (44) est sélectionné de telle sorte qu'un angle d'essuie-glace (20) minimal prédéterminé puisse être réglé, l'angle d'essuie-glace minimal se situant dans une plage de 45° à 55°.

6. Balai d'essuie-glace selon au moins l'une quelconque des revendications 1 à 5, **caractérisé en ce que** les parois (28, 36, 38) de la section d'essuie-glace (14) sont réalisées de manière rigide et fixe ou flexible.

7. Balai d'essuie-glace selon au moins l'une quelconque des revendications 3 à 6, **caractérisé en ce qu'**une, plusieurs ou toutes les lèvres de balai d'essuie-glace (18) sont formées sur la section d'essuie-glace (14) ou sont fixées à celle-ci en tant que partie séparée, la lèvre de balai d'essuie-glace (18) respective étant réalisée de manière biseautée d'un côté ou des deux côtés (50) et formant un angle d'essuie-glace (20) prédéterminé.

8. Balai d'essuie-glace selon au moins l'une quelconque des revendications 3 à 7, **caractérisé en ce que** la lèvre de balai d'essuie-glace (18) présente une longueur dans une plage de 0,5mm à 1,0mm ou dans une plage de 0,5mm à 1,5mm.

9. Balai d'essuie-glace selon au moins l'une quelconque des revendications 1 à 8, **caractérisé en ce que** la section d'essuie-glace (14) est en forme de boîte ou présente une forme rectangulaire ou quadrangulaire.

10. Balai d'essuie-glace selon au moins l'une quelconque des revendications 4 à 9, **caractérisé en ce que** l'élément de limitation (26) limite l'angle d'essuie-glace (20) à un angle d'essuie-glace (20) dans une plage de 45° à 55°.

11. Balai d'essuie-glace selon au moins l'une quelconque des revendications 4 à 10, **caractérisé en ce que** l'élément de limitation (26) est formé à l'intérieur de l'espace creux (22) ou est monté en tant que partie séparée.

12. Balai d'essuie-glace selon au moins l'une quelconque des revendications 1 à 11, **caractérisé en ce que** la section d'essuie-glace (14) est reliée à une section de fixation (16) pour fixer le balai d'essuie-glace (10) à une installation d'essuie-glace, à savoir à son bras d'essuie-glace.

13. Balai d'essuie-glace selon au moins l'une quelconque des revendications 1 à 12, **caractérisé en ce qu'**un fluide de nettoyage peut être guidé à l'intérieur de l'espace creux (22) de la section d'essuie-glace (14) et peut être distribué par l'intermédiaire d'ouvertures (52) correspondantes dans l'espace creux (22) et/ou un fluide de nettoyage peut être acheminé indépendamment du balai d'essuie-glace (10), l'espace creux (22) comprenant des ouvertures (52) ou étant réalisé de manière fermée.

14. Balai d'essuie-glace selon la revendication 13, **caractérisé en ce que** l'ouverture respective est réalisée sous la forme d'un dispositif de soupape (52), le dispositif de soupape (52) étant ouvert pour distribuer un fluide de nettoyage (34) provenant d'un espace creux (22) de la section d'essuie-glace (14) lorsque la section d'essuie-glace (14) adopte un angle d'essuie-glace (20) prédéterminé ou lorsque l'angle d'essuie-glace (20) de la section d'essuie-glace (14) se situe dans une plage d'angles d'essuie-glace prédéterminée.
